# FASCICULE DE BREVET EUROPEEN

(11) **EP 0 435 757 B1**
(45) Date de publication et mention de la délivrance du brevet: **30.03.1994**
(21) Numéro de dépôt: 90403710.8
(22) Date de dépôt: 20.12.1990
(51) Int. Cl.: G01B 7/10, G21C 17/06, G01B 7/14

(54) **Procédé et dispositif de mesure simultanée de distance entre tubes métalliques et d'épaisseur d'oxyde sur les tubes**
Verfahren und Vorrichtung zur gleichzeitigen Messung des Abstandes zwischen metallischen Tuben und der Oxyde-Dicke auf den Tuben
Method and device for measuring simultaneously the gap between metallical tubes and the thickness of oxyde on the tubes

(30) Priorité: 27.12.1989 FR 8917261
(43) Date de publication de la demande: 03.07.1991
(73) Titulaire: FRAMATOME, 92084 Courbevoie (FR); COMPAGNIE GENERALE DES MATIERES NUCLEAIRES (COGEMA), 78141 Vélizy-Villacoublay (FR)
(72) Inventeur: Netter, Alain, F-38090 Villefontaine (FR); Leroy, Gabriel, F-69300 Caluire et Cuire (FR)
(74) Mandataire: Fort, Jacques

(56) Documents cités:
- EP-A- 0 053 066
- EP-A- 0 170 341
- EP-A- 0 178 860
- FR-A- 2 534 015
- GB-A- 2 217 835
- US-A- 3 225 294
- US-A- 4 814 703
- PATENT ABSTRACTS OF JAPAN, vol. 8, no. 1 (P-246)(1438), 6 janvier 1984; & JP-A-58166203
- RGN - REVUE GENERALE NUCLEAIRE, no. 3, mai/juin 1988, pages 227-231, Paris, FR; J.-C. VAN CRAEYNEST et al.: "Les laboratoires chauds dans la recherche et le développement des combustibles REP"
- PATENT ABSTRACTS OF JAPAN, vol. 13, no. 460 (P-946)(3808), 18 octobre 1989; & JP-A-1180410

## Description

La présente invention concerne la mesure de la distance entre tubes métalliques sensiblement parallèles constituant une nappe et de l'épaisseur d'oxyde recouvrant éventuellement les tubes. Elle trouve une application particulièrement importante, bien que non exclusive, dans la mesure de la distance entre les tubes métalliques constituant les gaines de crayons appartenant à des assemblages combustibles nucléaires et de l'épaisseur d'oxyde recouvrant ces tubes.

Lorsque les assemblages combustibles sortis du coeur d'un réacteur après un cycle de fonctionnement ne sont pas complètement épuisés, ils sont rechargés dans le coeur à un autre emplacement. Avant ce rechargement, les assemblages doivent être contrôlés, afin de vérifier que leur état autorise un nouveau passage en réacteur sans risque excessif de rupture de gaines.

Il est notamment nécessaire de vérifier que l'écartement entre crayons adjacents ne s'est pas réduit localement de façon excessive. La réduction d'écartement peut notamment être provoquée par une arcure ou déformation en banane de certains crayons, réduisant localement l'écartement entre surfaces en regard des gaines. La réduction peut générer des points chauds et aboutir au percement des gaines, surtout lorsqu'elles celles-ci arrivent en contact. Même si les conséquences ne sont pas aussi graves, les variations d'écartement créent des défauts de circulation du réfrigérant et perturbent le cycle thermo-dynamique de façon préjudiciable au bon fonctionnement du réacteur.

On connaît déjà un procédé et un dispositif utilisant une sonde à courants de Foucault pour mesurer la distance entre des tubes métalliques. La sonde est constituée par un coin portant une bobine, qui s'insère plus ou moins profondément entre les tubes, suivant leur écartement (US-A-3 225 294).

Il est également souhaitable de mesurer l'épaisseur de la couche d'oxyde formée a la surface de la gaine en contact avec le réfrigérant. Cette couche d'oxyde diminue le coefficient d'échange thermique entre la gaine et le réfrigérant et provoque en conséquence une surchauffe de la gaine. Dans le cas par exemple des assemblages de combustible pour réacteur nucléaire à eau sous pression, les gaines en alliage à base de zirconium se recouvrent progressivement d'une couche de zircone. Lorsque l'épaisseur de cette couche dépasse une limite, d'environ 100 µm dans les réacteurs à eau sous pression actuels, le phénomène de formation d'oxyde tend à s'emballer et peut conduire à des fissurations de la gaine et donc au passage de produits de fission dans le réfrigérant.

A l'heure actuelle, l'écartement entre crayons d'un assemblage est généralement apprécié en faisant défiler une caméra en face de l'intervalle entre crayons, le long de l'assemblage. La caméra est équipée d'un réticule de référence et un opérateur suit les variations d'écartement entre les crayons sur l'écran de visualisation. Ce mode de mesure est pénible et sa fiabilité est incertaine.

On sait déjà mesurer l'épaisseur d'oxyde en des points déterminés d'une gaine de crayons située à la périphérie d'un assemblage combustible à l'aide d'une sonde à courants de Foucault qui est amenée en contact avec la gaine à examiner, par déplacement orthogonal à la gaine, puis relevée et amenée face au point de mesure suivant (Revue générale nucléaire, N^{º}3, Mai-Juin 1988, pages 229, article de Van Graeynest et al). Le dispositif destiné à cette mesure n'a pas d'autre fonction. Les mesures dimensionnelles s'effectuent par métrologie classique. Le mode d'amenée de la sonde en chaque point de mesure exige un repérage précis de l'emplacement de la gaine afin que la sonde soit placée radialement : les mesures sont très lentes lorsque l'on souhaite effectuer la mesure en des points suffisamment nombreux et rapprochés.

La présente invention vise à fournir un procédé et un dispositif permettant de mesurer simultanément la distance entre des tubes métalliques sensiblement parallèles constituant une nappe, notamment entre des tubes constituant les gaines des crayons d'un assemblage combustible, et de l'épaisseur d'oxyde recouvrant les tubes. Un but accessoire de l'invention est de réaliser un procédé et un dispositif de mesure permettant de réduire le temps d'examen d'un assemblage dans des proportions considérables, par comparaison avec l'art antérieur. Elle vise enfin à fournir un dispositif réalisable sous une forme permettant de mesurer l'écartement et les épaisseurs à l'intérieur d'un assemblage.

Dans ce but l'invention propose notamment un procédé de mesure simultanée de la distance entre tubes métalliques sensiblement parallèles constituant une nappe et de l'épaisseur d'oxyde recouvrant les tubes, conforme à la revendication 1.

L'invention propose également un dispositif permettant de mettre en oeuvre le procédé ci-dessus défini, suivant la revendication 3.

Dans un premier mode de réalisation de l'appareil, permettant la mesure de la distance entre les gaines de crayons appartenant aux nappes externes d'un assemblage combustible nucléaire, l'appareil de mesure comporte une table à déplacements croisés portant une platine sur laquelle la sonde est montée par des moyens permettant de la repousser élastiquement dans un des sens de déplacement de la table, ladite platine étant de plus déplaçable sur la table par des moyens permettant de faire circuler la sonde sur plusieurs tubes parallèles ayant des épaisseurs d'oxyde prédéterminées et connues et permettant de l'amener dans une position de mesure où elle est parallèle audit sens de déplacement.

L'invention sera mieux comprise à la lecture de la description, qui suit, de modes particuliers de réalisation de l'invention. La description se réfère aux dessins qui l'accompagnent, dans lesquels :
- la figure 1 est un schéma de principe, montrant l'influence d'une couche d'oxyde sur le signal de sortie d'une sonde à courants de Foucault ;
- la figure 2 montre l'allure de la variation du signal d'une sonde appliquée sur un tube en fonction de l'épaisseur d'oxyde sur le tube ;
- la figure 3 est un schéma montrant le déplacement d'une sonde à courants de Foucault lors de la mise en oeuvre du procédé suivant l'invention pour l'examen des crayons appartenant à une nappe latérale d'un assemblage combustible nucléaire ;
- la figure 4 est une vue en coupe montrant une constitution possible de sonde utilisable pour la mise en oeuvre de l'invention, en coupe suivant un plan passant par l'axe d'application contre les crayons à examiner ;
- la figure 5A est une vue schématique en plan de la sonde et de la platine qui la porte, au cours de l'étalonnage ;
- la figure 5B, similaire à la figure 5A, montre la platine dans la position qu'elle occupe lors des opérations de mesure ;
- la figure 6 est un synoptique de principe de la chaîne d'acquisition et de traitement d'un dispositif selon un mode particulier de réalisation de l'invention ;
- la figure 7 montre une courbe représentative des variations du signal analogique de la sonde de mesure ;
- la figure 8 est un schéma montrant une disposition possible d'un assemblage à contrôler et d'un dispositif suivant l'invention, dans une piscine de stockage d'assemblages combustibles irradiés ;
- les figures 9, 10 et 11 sont des schémas montrant, en coupe et en perspective, des têtes de sondes à courants de Foucault permettant d'effectuer des mesures entre nappes de crayons d'un assemblage combustible ;
- la figure 12 est un schéma de principe, en coupe suivant un plan horizontal, montrant l'utilisation d'une tête de mesure du genre montré en figures 9, 10 ou 11 dans un dispositif de mesure.

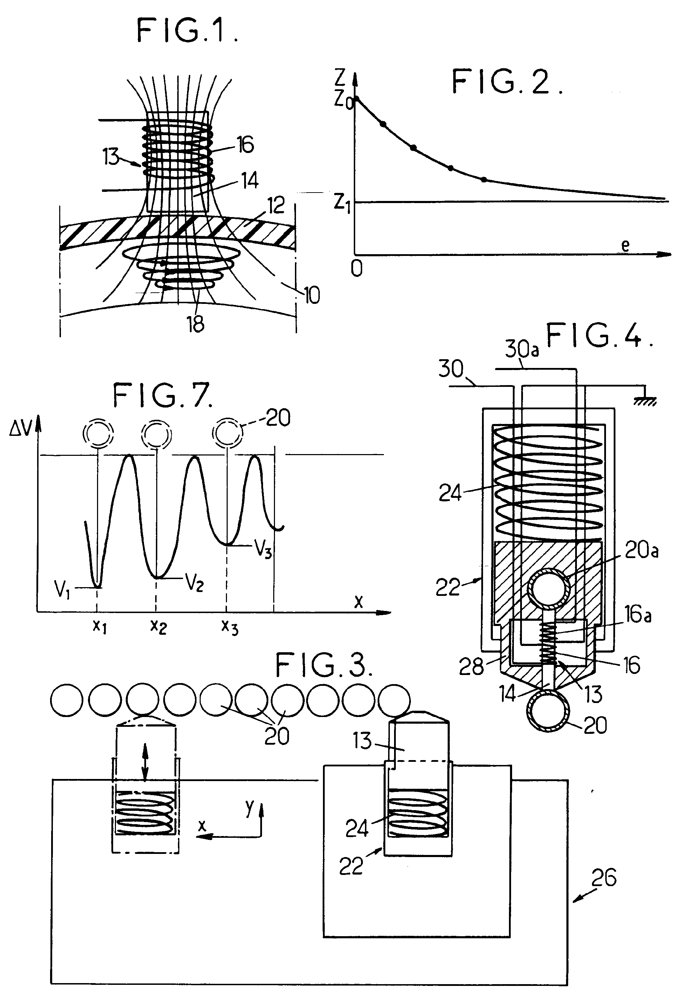

Avant de décrire l'invention, on rappellera les principes d'utilisation d'une sonde à courants de Foucault pour mesurer l'épaisseur d'oxyde sur un tube métallique, tel qu'une gaine de crayon contenant un combustible à l'état d'oxyde, donc non conducteur. La figure 1 montre une fraction d'une gaine 10, en alliage à base de zirconium en général, sur laquelle s'est formée une couche d'oxyde 12 non conductrice. Une sonde à courants de Foucault 13 comporte un noyau en matériau magnétique 14 portant une bobine 16 à laquelle est appliquée une tension électrique à fréquence élevée, généralement comprise entre 1 et 4 MHz. Lorsque la sonde 14 est en contact avec la gaine 10, elle induit des courants de Foucault, schématisés par les lignes 18, dans la partie conductrice, c'est-à-dire dans le métal de la gaine. Ces courants de Foucault créent un champ magnétique inverse qui induit dans la sonde 13, une force contre-électromotrice qui augmente l'impédance apparente de la bobine 16. L'impédance augmente d'autant plus que l'épaisseur de la couche isolante 12 est plus faible donc que la sonde 13 est proche du métal. La relation entre l'impédance Z de la bobine 16 et l'épaisseur e de la couche d'oxyde présente l'allure montrée en figure 2 : pour une épaisseur d'oxyde nulle, l'impédance Z de la bobine a une valeur maximale Z_{O}. Au fur et à mesure que l'épaisseur e augmente, l'impédance apparente diminue et tend de façon asymptotique vers une valeur Z₁. La mesure de l'impédance Z dans la zone où elle varie rapidement avec l'épaisseur, permet de déterminer l'épaisseur d'oxyde. Pour la mise en oeuvre de l'invention, la fréquence de travail sera choisie de façon à autoriser une mesure significative au moins jusqu'à l'épaisseur maximale tolérable, c'est-à-dire 100 µm environ dans le cas d'une gaine. Une fréquence de 1,5 MHz sera souvent satisfaisante en cas de gaines en alliage à base de zirconium.

Comme le montre la figure 3, pour la mesure séquentielle des épaisseurs d'oxyde sur des crayons 20 d'une nappe périphérique d'assemblage combustible sans avoir à relever la sonde, à déplacer transversalement, puis à la réappliquer à chaque opération, un dispositif suivant l'invention comprend un boîtier 22 dans lequel une sonde à courants de Foucault 13 est montée de façon à pouvoir coulisser parallèlement à l'axe de sa bobine 16 et des moyens élastiques, schématisés par un ressort 24, qui tendent à amener la sonde 13 dans la position de saillie maximum où elle est représentée en traits pleins sur la figure 3.

Le boîtier 22 est porté par une table à mouvements croisés 26, permettant de le déplacer dans une direction y parallèle à l'axe de la sonde 13 et une direction orthogonale x. Le noyau de la sonde 13 (ou une tête dans laquelle est noyée cette sonde) présente une partie terminale en saillie de forme tronconique, dont la conicité est telle que, lorsque le boîtier 22 est déplacé dans la direction x à partir de la position initiale où il est montré en figure 3, la sonde constitue un palpeur qui reste, sous la pression du ressort 24, en contact permanent avec les gaines des crayons 20, et suit leurs contours.

Dans un mode avantageux de réalisation, montré en figure 4, la sonde 13 comporte un noyau 14 fixé dans l'axe d'une tête 28 en matériau isolant, ayant une partie terminale tronconique. Le noyau affleure à l'extrémité de la tête 28. Il porte la bobine de mesure 16 qui créée un champ dont les lignes de force traversent la gaine du crayon 20 à contrôler. Il porte également, en arrière de la bobine 16, une bobine de référence 16a qui créée un champ dont les lignes de force traversent un tronçon de gaine 20a noyé dans la tête 28, en contact avec le noyau 14 et en alignement avec ce noyau. Ce tronçon de gaine représente un étalon de référence, qu'on choisit non oxydé. Les bobines 16 et 16a sont reliées à des circuits extérieurs, qui seront décrits plus loin, par des conducteurs 30 et 30a.

Comme le montre la figure 3, une séquence de mesure effectuée sur les crayons 20 d'une nappe, lors de la mise en oeuvre de l'invention à l'aide du dispositif de la figure 4, implique d'amener le boîtier 22, par des déplacements en x et y de la table 26 commandés manuellement, dans la position montrée en figure 3, puis d'actionner la table 26 pour déplacer le boîtier dans le direction x. La tête 28 suit alors le profil des crayons 20.

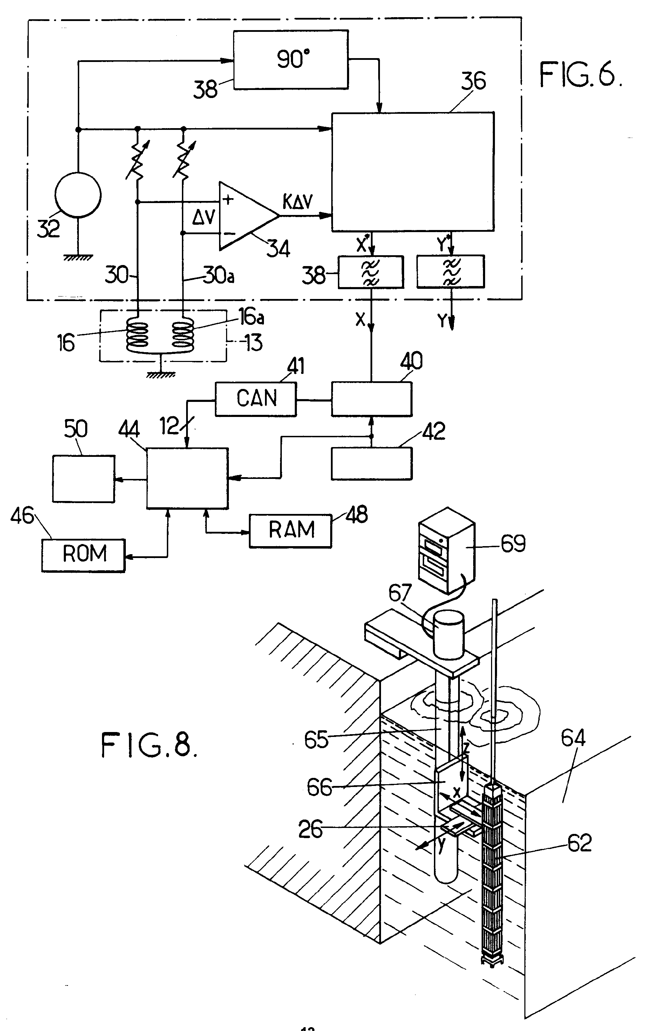

Les circuits extérieurs d'exploitation du signal fourni par la sonde peuvent avoir la constitution de principe montrée en figure 6. Ces circuits comprennent une partie analogique et une partie numérique. La partie analogique a un générateur 32 fournissant une tension sinusoïdale de référence commune, par exemple à 1,5 MHz. Lorsque la bobine de mesure 16 présente une impédance différente de celle de la bobine de calibrage 16a, une tension différentielle ΔV apparaît entre les bobines. Un amplificateur différentiel 34 amplifie cette tension et l'applique à un détecteur synchrone 36 qui reçoit également, comme signaux de référence, la tension de sortie du générateur 32 et la même tension déphasée de 90° par un déphaseur 38. Le détecteur synchrone extrait les composantes X et Y du vecteur ΔV qui sont soumises à un filtrage passe-bande dans des filtres 38 de réduction du bruit.

Dans la pratique, il suffit d'exploiter une des composantes, par exemple la composante X.

Lors des déplacements de la tête le long de la nappe de crayons (figure 3) le signal de sortie ΔV et la composante X présentent des variations en fonction de la distance x du genre montré en figure 7. Le signal X a des maxima successifs correspondant au passage de la sonde au milieu de l'intervalle entre deux crayons successifs. Ces maxima ont pratiquement tous la même valeur, étant donné l'absence de matériau métallique au droit de la sonde à ces emplacements. Le signal passe également par des minima successifs V₁, V₂, V₃ lorsque la sonde 13 est au droit des génératrices de chacun des crayons successsifs, pour des positons x₁, x₂, x₃ de la sonde. L'amplitude des minima est directement fonction de l'épaisseur d'oxyde présente sur la gaine.

Le calcul des positions x₁, x₂, x₃ et le calcul des épaisseurs d'oxyde sont effectués par la partie numérique des circuits de mesure. Dans la constitution illustrée en figure 6, cette partie numérique comprend un échantillonneur 40 dont la cadence d'échantillonnage est avantageusement fixée par un capteur 42 de mesure du déplacement en x de la table 26, constituée par exemple par un codeur numérique. Le pas d'incrémentation du capteur est choisi en fonction de la résolution souhaitée pour la mesure.

Les échantillons successifs sont numérisés dans un convertisseur analogique-numérique ou CAN 41, le nombre de niveaux de quantification étant choisi en fonction de la précision souhaitée sur la mesure de l'épaisseur d'oxyde. Dans la pratique, lorsqu'on souhaite une dynamique de 10³ (par exemple pour traiter un signal allant de 0 à 10 volts avec une résolution de 10 mV) une quantification sur 10 bits est nécessaire. On pourra utiliser un CAN du commerce quantifiant chaque échantillon sur 12 bits. Les échantillons numérisés successifs sont appliqués à un calculateur 44 ayant une mémoire de programme 46 et une mémoire vive de travail 48. Le calculateur est programmé pour :
- déterminer, par exemple par dérivation et détermination des passages par zéro, les minima successifs du signal X,
- calculer les positions x₁, x₂, x₃, à partir des indications reçues du capteur de déplacement 42 et en déduire, par soustraction, les distances entre crayons le long du trajet parcouru par la sonde,
- calculer, à partir d'une courbe d'étalonnage (du genre montré en figure 2) également mémorisée, les épaisseurs d'oxyde, à partir des minima V₁, V₂, V₃ etc.

Les résultats de la mesure peuvent être stockés en mémoire de masse 50 (disques durs, disquettes, etc.) et visualisés en temps réel ou en temps différé.

Du fait que le signal X prend une valeur minimum lorsque la sonde est exactement alignée avec l'axe du crayon, les mesures peuvent être très précises. Du fait que les mesures s'effectuent à la volée, par un simple déplacement linéaire de la table 46, elles peuvent être beaucoup plus rapides que dans les procédés suivant l'art antérieur.

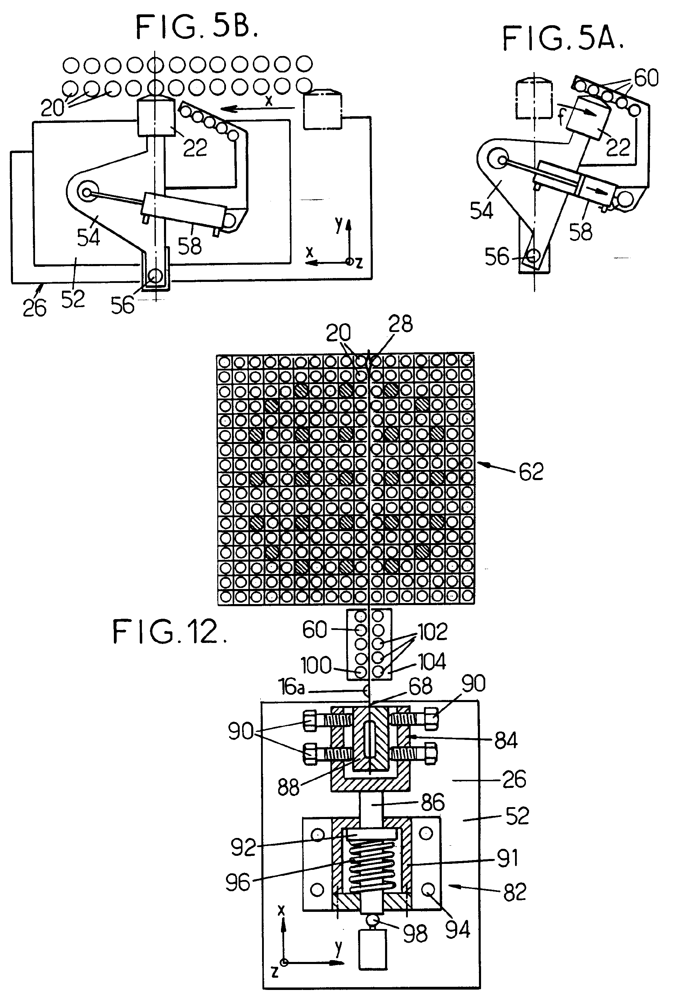

La courbe de calibrage de la figure 2 peut être établie préalablement à la mesure des épaisseurs d'oxyde sur les crayons d'une nappe et stockée, pour toute la durée du contrôle d'un assemblage, sous forme cartographique en mémoire vive 48. Une solution plus avantageuse consiste à effectuer périodiquement une vérification et éventuellement une mise à jour de la courbe de calibrage de la figure 2 entre des séquences de mesures successives. Pour cela, il est possible d'utiliser un montage de la tête sur la table 26 du genre montré en figure 5A et 5B.

Sur le plateau 52, mobile suivant x et y, de la table à mouvements croisés 26 est montée une platine 54. La platine peut tourner sur le plateau 52 autour d'un axe 56 parallèle à l'axe des crayons 20 à contrôler (axe z). Des moyens de déplacement, schématisés par un vérin 58 interposé entre la platine 54 et le plateau 52, permettent de faire tourner la platine 54 entre une position de mesure où elle est représentée en figure 5B et des positions d'étalonnage. La platine porte le boîtier 22 contenant une tête 28 qui peut être du genre montré en figure 4.

Dans la position de mesure montrée, en figure 5B, l'axe du boîtier 22 et de la sonde 13 est dirigé orthogonalement à la nappe de crayons 20 : lorsque la table 26 est mise en action pour déplacer le boîtier 22 dans la direction x, le fonctionnement est celui qui vient d'être décrit.

Pour étalonner le dispositif, la table à mouvements croisés 26 est commandée de façon à dégager le boîtier 22 de la nappe de crayons 20. Puis le vérin 58 est mis en action pour déplacer le boîtier 22 dans la direction indiquée par la flèche f sur la figure 5A, à partir de la position de mesure. Le plateau 52 porte plusleurs tubes d'étalonnage 60 dont les axes sont parallèles à ceux des crayons 20 et qui sont recouverts d'épaisseurs d'oxyde échelonnées, en règle générale depuis une épaisseur faible jusqu'à l'épaisseur maximale à mesurer. Ces tubes 60 peuvent être constitués par des tronçons de gaine identiques à celles des crayons 20, oxydées sur des profondeurs connues et déterminées. Ces tronçons de gaine sont disposés suivant un arc de cercle, à une distance de l'axe 56 telle que, dans son déplacement, la sonde du boîtier 22 les suit dans les conditions où elle parcourt les gaines des crayons 20 lors de la mesure. Les épaisseurs d'oxyde sont par exemple choisies pour correspondre aux points indiqués sur la figure 2. Les minima de signal obtenus sont mémorisés par le calculateur 44, en même temps que les épaisseurs connues. Le calcul des épaisseurs d'oxyde sur les gaines des crayons 20 s'effectue alors par interpolation, en mettant en oeuvre des programmes existants et bien connus.

La figure 8 montre une disposition possible d'un assemblage combustible nucléaire 62 à contrôler et d'un dispositif de mesure selon l'invention. L'assemblage 62 est immergé dans une piscine de stockage 64, à une profondeur suffisante pour assurer la protection biologique. Le dispositif comprend une colonne 65 sur laquelle est monté un chariot 66 qu'un moteur 67 permet de déplacer verticalement, suivant la direction z. Ce chariot porte la table 26 à mouvements croisés. Ce dispositif permet de mesurer la distance entre crayons et l'épaisseur d'oxyde sur les crayons d'une nappe périphérique occupant une face de l'assemblage, à plusleurs niveaux z. On peut ensuite faire tourner l'assemblage 62 pour réaliser les mesures sur la nappe latérale occupant une autre face. Les circuits d'exploitation de signal et de commande des déplacements peuvent être regroupés dans une armoire 69.

Le dispositif décrit jusqu'ici ne permet de vérifier que les crayons appartenant aux nappes latérales d'un assemblage et de n'effectuer ce contrôle que sur les génératrices dirigées vers l'extérieur de l'assemblage.

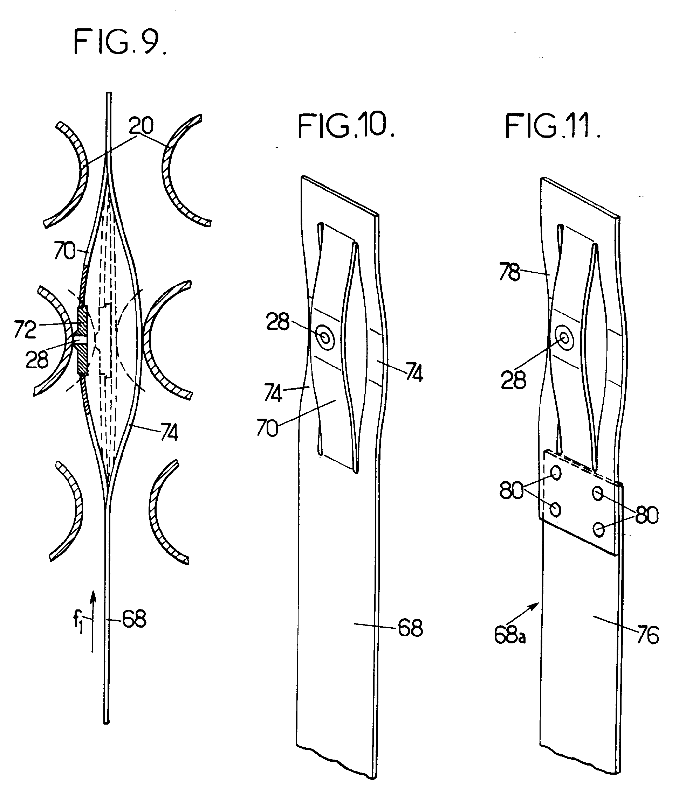

Les variantes de réalisation montrées en figures 9 à 12 permettent au contraire d'effectuer des mesures au sein même de l'assemblage.

Les figures 9 et 10 montrent schématiquement une première réalisation. Une tête 28 de mesure est portée par une lame 68 qu'on désignera ultérieurement par le terme de "sabre". Cette tête peut avoir une constitution similaire à celle montrée en figure 4. Cependant la distance disponible entre deux nappes sera souvent insuffisante pour permettre d'y loger la bobine de référence 16a en plus de la bobine de mesure 16. La bobine de référence est alors reportée sur une partie du sabre 68 qui reste en permanence à l'extérieur de l'assemblage combustible. Le sabre 68 a une épaisseur suffisamment faible pour pouvoir passer entre deux nappes de crayons 20. Il est en un matériau ayant une résistance électrique notablement plus élevée que celle des gaines des crayons. Pratiquement, on peut utiliser un sabre 68 en matériau isolant, tel qu'une résine synthétique armée, ou un alliage inoxydable tel qu'un "inconel 718".

Le sabre 68 a une partie pleine et une partie terminale dans laquelle sont ménagées des fentes délimitant un secteur central 70 portant la tête 28, éventuellement par l'intermédiaire d'une rondelle isolante 72, et deux secteurs latéraux 74. Le secteur central 70 présente une courbure de sens opposée à celle des secteurs latéraux. La cambrure au repos des secteurs est telle que la sonde, située au milieu du secteur 70, s'appuie contre les crayons et suit leur profil lorsqu'on déplace le sabre 68 dans le sens de la flèche f₁ ou en sens contraire.

Le matériau constitutif du sabre est choisi de façon que les secteurs s'écrasent élastiquement lorsque cela est nécessaire pour que la sonde puisse se glisser entre des crayons 20 dont l'écartement est inférieur à l'écartement nominal, comme indiqué par exemple en traits mixtes sur la figure 9. La forme au repos des secteurs est telle que la tête 28 reste appliquée fermement contre les crayons 20 même pour l'écart maximum possible entre les surfaces en regard des crayons.

Dans le mode de réalisation montré schématiquement en figure 11, le sabre 68a est en deux pièces : il comporte une lame 76, par exemple en matière isolante souple, et un tronçon terminal 78 identique à celui montré en figure 9 et 10, pouvant être en "inconel" fixé à la lame par des rivets 80.

D'autres constitutions encore de la partie mécanique du sabre sont possibles, par exemple du genre montré dans le document EP-A-0 178 860, qui toutefois porte une sonde ultra-sonore.

La figure 12 montre un montage possible du sabre suivant la figure 9 ou 10 dans un dispositif permettant un calibrage par comparaison avec des tubes d'étalonnage. Le dispositif de la figure 12 comporte encore une table à mouvements croisés ayant un plateau 52 déplaçable en x et y. Le sabre 68 est monté sur le plateau, où sur une platine fixée au plateau, par l'intermédiaire de moyens permettant un réglage de position du sabre et ayant une fonction de sécurité.

Les moyens représentés peuvent être regardés comme comprenant un bloc de sécurité 82, limitant les efforts sur le sabre, monté sur le plateau 26, et une pince 84 de connexion du sabre 68 avec le bloc de sécurité.

La pince de préhension 84 est une pièce ayant une tige 86 de liaison avec le bloc de sécurité et une fourche de réception d'un porte sabre 88 en deux pièces. Quatre vis de réglage et de blocage 90 permettent de régler l'orientation et la position du sabre 68 de façon précise.

Le bloc de sécurité 82 limite les efforts exercés sur le sabre dans la direction x de balayage des crayons 20. Il comprend un carter 91 délimitant un logement dans lequel peut coulisser une collerette 92 de la tige 86. Le carter 91 est fixé au plateau 26 par des moyens quelconques, tels que des vis 94. Il contient un ressort 96 qui tend à maintenir la collerette 92 dans la position de saillie maximum où elle est représentée en figure 12. Le ressort 96 est taré de façon à se comprimer lorsque la force d'enfoncement qui s'exerce sur la tige 86 dépasse un seuil déterminé, fixé en fonction de l'effort maximum tolérable sur la sonde et le sabre. L'extrémité de la tige 86 est en appui contre un contacteur 98 de façon que tout enfoncement de la tige à partir de la position montrée en figure 12 ouvre le contacteur 98, placé dans un circuit de sécurité qui provoque alors l'arrêt du déplacement 26 dans le sens x.

Le bloc de sécurité sera en général complété par des contacts supplémentaires commandés par le sabre ou le plateau 52, interdisant tout déplacement dans les directions y et z lorsque le sabre 68 est engagé entre les crayons 20.

La sonde peut, comme dans le cas des figures 5a et 5b, être étalonnée par comparaison avec plusieurs tronçons de gaine 60 portant des épaisseurs d'oxyde différentes et connues, allant par exemple de 10 à 100 µm, et un tronçon de gaine non oxydé 100 définissant un point initial de référence. Les tronçons de gaine 60 et 100, ainsi que des tronçons de gaine postiches 102 alignés parallèlement aux premiers et destinés à provoquer un étalonnage dans des conditions représentatives de celles rencontrées par la sonde à l'intérieur de l'assemblage, sont portées par un support 104 fixé dans la direction x, mais déplaçable dans les directions z et y pour permettre un nouvel étalonnage avant chaque série de mesures sur une nappe.

Dans le mode de réalisation montré en figure 12, le support 104 est placé entre l'assemblage 62 à contrôler et le plateau 26, les crayons 60 étant dans le prolongement de la nappe de crayons 20 à contrôler. Le sabre 68 a alors une longueur suffisante pour que la sonde de mesure 13 puisse balayer successivement les tronçons de gaines de calibrage et les gaines de crayons 20 à contrôler. La bobine de référence 16a peut être placée à proximité immédiate de la pince 84.

La séquence des opérations au cours d'un cycle de mesure d'intervalle entre les crayons d'une nappe et de mesure d'épaisseur d'oxyde sont alors les suivantes.

La sonde 13 est tout d'abord amenée à l'altitude z où doit être effectuée la mesure, au droit d'un espace entre deux nappes, par commande manuelle du déplacement vertical en z, puis du mouvement transversal en y. Le sabre 68 est avancé jusqu'à ce que la sonde soit en face du premier tronçon de gaine 100, par commande manuelle suivant la direction x. Si nécessaire, un équilibrage du circuit de mesure est alors réalisé.

La séquence suivante d'opérations peut être entièrement automatique, à la suite du déclenchement d'un mouvement d'enfoncement du sabre suivant la direction x. Il y a successivement étalonnage par balayage des tronçons de gaine 60 et mémorisation des résultats, puis remesure sur toute la rangée de crayons.

A la fin du mouvement d'avancée du sabre, ce dernier est retiré, de façon automatique ou à la suite d'une commande manuelle, avec éventuellement une nouvelle mesure et/ou un nouvel étalonnage.

Grâce au dispositif montré sur les figures 9 à 12, il est possible de contrôler les crayons d'un assemblage le long de quatre génératrices et en des points relativement rapprochés dans le sens longitudinal, du fait de la rapidité des mesures. L'utilisation des secteurs flexibles pour porter la sonde permet à cette dernière de se glisser non seulement entre deux gaines, mais aussi entre une gaine et un tube guide du genre rencontré dans les assemblages combustibles existants.

## Revendications

1. Procédé de mesure par courants de Foucault de la distance entre tubes métalliques (20) sensiblement parallèles constituant une nappe, caractérisé en ce que pour mesurer en même temps l'épaisseur d'oxyde recouvrant les tubes : on déplace une sonde à courants de Foucault (13) parallèlement à la nappe en l'appu- yant au passage sur les tubes ; on enregistre un signal électrique fourni par la sonde et représentatif des variations d'impédance de la sonde ; on déduit la distance entre tubes de la mesure du déplacement de la sonde entre valeurs du signal correspondant à des extrema successifs d'impédance ; et on déduit l'épaisseur d'oxyde sur chaque tube d'une comparaison entre la valeur de l'extremum respectif et au moins une valeur obtenue par mesure sur un tube étalon portant une épaisseur d'oxyde prédéterminée et connue.

2. Procédé selon la revendication 1, caractérisé en ce que le procédé comporte une étape consistant à faire circuler la sonde sur une nappe de tubes d'étalonnage ayant des épaisseurs d'oxyde différentes et réparties sur la plage des épaisseurs d'oxyde à mesurer.

3. Dispositif de mesure, à l'aide d'une sonde à courants de Foucault (13), de la distance entre tubes métalliques (20) sensiblement parallèles constituant une nappe, caractérisé en ce que, pour mesurer simultanément l'épaisseur d'oxyde recouvrant les tubes, le dispositif comprend également : des moyens (26) pour déplacer la sonde dans une direction déterminée et mesurer le déplacement de la sonde, ladite sonde comportant des moyens (24) pour la repousser élastiquement, transversalement à la direction de déplacement, et l'appliquer sur des tubes (20) rencontrés ; des moyens de mesure (34-38) fournissant un signal fonction de l'impédance de la sonde ; des moyens (40 à 50) de traitement du signal permettant de déterminer les extrema du signal et les emplacements de la sonde correspondant aux extrema ; et des moyens de calcul d'épaisseur de couche superficielle isolante par comparaison entre lesdits extrema et au moins une valeur correspondant à une épaisseur prédéterminée et connue.

4. Dispositif selon la revendication 3, caractérisé en ce qu'il comporte une table à déplacements croisés (26) portant une platine (54) sur laquelle la sonde est montée par des moyens permettant de la repousser élastiquement dans un des sens de déplacement de la table (26), ladite platine étant de plus déplaçable sur la table par des moyens (58) permettant de faire circuler la sonde (13) sur plusieurs tubes parallèles (60) d'étalonnage ayant des épaisseurs d'oxyde prédéterminées et connues et permettant de l'amener dans une position de mesure où elle est parallèle audit sens de déplacement.

5. Dispositif selon la revendication 3 ou 4, caractérisé en ce que la sonde (13) est incorporée à une tête présentant une partie terminale tronconique de conicité telle qu'elle suive le profil des tubes lors de ses déplacements parallèlement à la nappe.

6. Dispositif selon la revendication 5, caractérisé en ce que la tête comporte une bobine de référence (16a) qui crée un champ dont les lignes de force traversent un tronçon de tube (20a) non oxydé noyé dans la tête (28), constituant un étalon de référence, et en ce que le dispositif comporte des moyens de mesure par comparaison des signaux de sortie de la bobine de la sonde de mesure et de la bobine de référence.

7. Dispositif selon la revendication 4, caractérisé en ce que la platine est montée sur la table de façon à pouvoir tourner autour d'un axe parallèle aux tubes d'étalonnage, qui sont disposés suivant une nappe cylindrique centrée sur un axe de rotation de la plate-forme sur la nappe.

8. Dispositif selon la revendication 3, caractérisé en ce qu'il comporte une lame (68) de faible épaisseur, ayant une partie terminale dans laquelle sont délimités un secteur central (70) portant la sonde (13) et deux secteurs latéraux (74), le secteur central (70) ayant une courbure de sens opposé à celle des secteurs latéraux.

9. Dispositif selon la revendication 8, caractérisé en ce que la lame est montée sur la table à mouvements croisés par l'intermédiaire de moyens permettant un réglage de la position de la lame et ayant une fonction de limitation d'effort.

10. Dispositif selon la revendication 8 ou 9, caractérisé en ce qu'il comprend une rangée de tronçons de tube d'étalonnage portant des épaisseurs d'oxyde différentes et connues et une rangée de tronçons postiches alignés parallèlement aux premiers tronçons, l'intervalle entre les rangées étant aligné avec la lame et les tronçons de tube d'étalonnage étant placés face à la sonde.

## Patentansprüche

1. Verfahren zum Messen des Abstands zwischen etwa parallel zueinander verlaufenden Metallrohren (20), die eine Schicht bilden mittels Foucault-Strömen,
**dadurch gekennzeichnet,**
daß zur gleichzeitigen Messung der Oxidschichtdicke, die die Rohre bedeckt, eine Foucault-Stromsonde (13) parallel zur Schicht bewegt wird, indem während die Sonde auf die Rohre aufgedrückt wird, ein elektrisches Signal registriert wird, das von der Sonde geliefert wird und die Änderung der Impedanz der Sonde wiedergibt, der Abstand zwischen den Rohren aus der Messung der Bewegung der Sonde zwischen Werten, die aufeinanderfolgenden Impedanzextrema entsprechen, abgeleitet wird und die Oxidschichtdicke auf jedem Rohr aus einem Vergleich zwischen dem jeweiligen Extremwert und mindestens einem Wert gewonnen wird, der durch Messung auf einem Eichrohr erhalten wird, das eine vorbestimmte und bekannte Oxidschichtdicke aufweist.

2. Verfahren nach Anspruch 1,
gekennzeichnet durch
einen Schritt, der darin besteht die Sonde auf einer Eichrohrschicht zu bewegen, wobei die Eichrohre unterschiedliche Oxidschichtdicken haben, die sich im Bereich der zu messenden Oxidschichtdicken bewegen.

3. Vorrichtung zur Messung des Abstandes zwischen Metallrohren (20), die in etwa parallel zueinander sind und eine Schicht bilden mittels einer Foucault-Stromsonde (13),
**dadurch gekennzeichnet,**
daß zur gleichzeitigen Messung der Oxidschichtdicke auf den Rohren die Vorrichtung ferner aufweist: Mittel (26) zum Bewegen der Sonde in eine bestimmte Richtung und zum Messen der Bewegung der Sonde, wobei die Sonde Mittel (24) aufweist, mit der sie elastisch und transversal zur Bewegungsrichtung zurückgeschoben wird und auf die Rohre (20), denen die Sonde begegnet, angedrückt wird, Meßorgane (34-38), die ein Signal in Abhängigkeit von der Impedanz der Sonde liefern, Signalverarbeitungsmittel (40-50), die es erlauben die Extrema des Signals zu bestimmen und die Lage der Sonde entsprechend den Extrema und Mittel zur Berechnung der Schichtdicke der isolierenden Oberflächenschicht durch Vergleich zwischen den Extrema und mindestens einem Wert, der einer vorbestimmten und bekannten Schichtdicke entspricht.

4. Vorrichtung nach Anspruch 3,
gekennzeichnet durch
einen xy-Tisch (26) mit einer Platte (54), auf der die Sonde mit Hilfe von Organen befestigt ist, die es ermöglichen die Sonde elastisch in einer der Bewegungsrichtungen des Tischs (26) zurückzudrücken, wobei die Platte ferner auf dem xy-Tisch über Organe (58) beweglich ist, die es ermöglichen die Sonde (13) auf mehreren parallel zueinander verlaufenden Eichrohren (60) zu bewegen, die vorbestimmte und bekannte Oxidschichtdicken aufweisen und die es erlauben die Sonde in eine Meßstellung zu bringen, in der sie parallel zur Bewegungsrichtung ausgerichtet ist.

5. Vorrichtung nach Anspruch 3 oder 4,
dadurch gekennzeichnet,
daß die Sonde (13) in einen Kopf eingebaut ist, der einen kegelstumpfförmigen Endbereich aufweist derart, daß die Sonde dem Profil der Rohre während ihrer Bewegung parallel zur Schicht verfolgt.

6. Vorrichtung nach Anspruch 5,
dadurch gekennzeichnet,
daß der Kopf eine Referenzwicklung (16a) aufweist, die ein Feld erzeugt, deren Kraftlinien einen Rohrabschnitt (20a) durchqueren, der nicht oxidiert ist und in den Kopf (28) eingelassen ist und eine Eichreferenz darstellt und dadurch, daß die Vorrichtung Mittel zum Messen der Ausgangssignale der Wicklung der Meßsonde und der Referenzwicklung durch Vergleich mißt.

7. Vorrichtung nach Anspruch 4,
dadurch gekennzeichnet,
daß eine Platte derart auf dem Tisch befestigt ist, daß sie um eine Achse parallel zu den Eichrohren drehbar ist, die auf einer Zylindermantelschicht, die auf der Drehachse der Plattform zentriert ist, angeordnet ist.

8. Vorrichtung nach Anspruch 3,
gekennzeichnet durch
eine Klinge (68) geringer Dicke, mit einem Endbereich, in dem ein mittlerer Abschnitt (70) abgegrenzt ist, der die Sonde (13) trägt und zwei seitliche Abschnitte (74), wobei der mittlere Abschnitt (70) eine Krümmung aufweist, die der der äußeren Abschnitte entgegengesetzt ist.

9. Vorrichtung nach Anspruch 8,
dadurch gekennzeichnet,
daß die Klinge auf dem xy-Tisch über Mittel befestigt ist, die eine Justierung der Lage der Klinge ermöglicht und die Funktion eines Kraftbegrenzers erfüllen.

10. Vorrichtung nach Anspruch 8 oder 9,
gekennzeichnet durch
eine Reihe von Eichrohrabschnitten, mit unterschiedlichen und bekannten Oxidschichtdicken und einer Reihe unechter Brennstababschnitte, die parallel zu den ersten Abschnitten angeordnet sind, wobei der Abstand zwischen den Reihen mit der Klinge ausgerichtet ist und die Eichrohrabschnitte gegenüber der Sonde angeordnet sind.

## Claims

1. A method for eddy current measurement of the distance between substantially parallel metal tubes (20) forming a sheet,
characterized in that, for simultaneously measuring the thickness of oxide covering the tubes: an eddy current probe (13) is moved parallel to the sheet while maintaining the probe applied on the tubes; an electric signal delivered by the probe and representing impedance variations of the probe is recorded; the distances between the tubes are derived from measurement of the amounts of displacement of the probe between values of the signal which correspond to successive extremum values of the impedance; and the thickness of oxide on each tube is derived from a comparison between the respective extremum value and at least one value obtained by measurement on a standard tube carrying a predetermined known thickness of oxide.

2. Method according to claim 1, characterized in that the method includes a step of moving the probe over a sheet of standard tubes having mutually different oxide thicknesses and distributed over a range of oxide thicknesses to be measured.

3. Device for measuring, with an eddy current probe (13) the distance between substantially parallel metal tubes (20) forming a sheet,
characterized in that, for simultaneously measuring a thickness of oxide on the tubes, the device further comprises: means (26) for moving the probe along a predetermined direction and for measuring the amounts of movement of the probe, said probe comprising means (24) for resiliently biasing it transversely to the direction of movement and applying it on the encountered tubes (20); measurement means (34-38) for delivering a signal which is responsive to the impedance of the probe; means (40 to 50) for processing the signal and determining the extremum values of said signal and the locations of the probe corresponding to the extremum values; and means for computing the thicknesses of insulating superficial layer by comparing said extremum values with at least one value corresponding to a predetermined known thickness.

4. Device according to claim 3,
characterized in that it comprises a cross-movement table (26) carrying a platform (54) on which the probe is carried by means for resiliently forcing it in one of the directions of movement of the table (26), said platform being further movable on the table by means (58) for circulating the probe (13) on a plurality of calibration parallel tubes (60) having predetermined known oxide thicknesses and enabling to move it into a measurement position where it is parallel to said direction of movement.

5. Device according to claim 3 or 4,
characterized in that the probe (13) belongs to a head having a frusto-conical end portion degree of taper that the head follows the profile of the tubes during movements thereof parallel to the sheet.

6. Device according to claim 5,
characterized in that the head has a reference coil (16a) which generates a field whose field lines traverse a non-oxidized tube section (20a) embedded in the head (28) and constituting a reference standard and in that the device comprises measurement means comparing the output signals of the coil of the measurement probe and of the reference coil.

7. Device according to claim 4,
characterized in that the platform is carried by the table for rotation about an axis which is parallel to the calibration tubes, which are arranged in a cylindrical row centered on an axis of rotation of the platform on the table.

8. Device according to claim 3,
characterized in that it comprises a strip (68) of low thickness, having a terminal portion formed with a central sector (70) carrying the probe (13) and with two lateral sectors (74), the central sector being bent in a direction opposite to that of the lateral sectors.

9. Device according to claim 8,
characterized in that the strip is carried by the cross-movement table through means for adjusting the position of the strip and for force limitation.

10. Device according to claim 8 or 9,
characterized in that it comprises a row of calibration tube sections carrying layers of oxide having different known thicknesses and a row of dummy tube sections aligned parallel to the first tube sections, the gap between the rows being in alignment with the strip and the calibration tube sections confronting the probe.
